Europäisches Patentamt

European Patent Office

Office européen des brevets

(19)

(11) Publication number: **0 062 086**
**B1**

(12) **EUROPEAN PATENT SPECIFICATION**

(45) Date of publication of patent specification: **21.11.85**

(21) Application number: **81102620.2**

(22) Date of filing: **07.04.81**

(51) Int. Cl.⁴: **B 01 D 13/00, B 01 D 13/04**

(54) **Liquid treatment device.**

(43) Date of publication of application:
**13.10.82 Bulletin 82/41**

(45) Publication of the grant of the patent:
**21.11.85 Bulletin 85/47**

(84) Designated Contracting States:
**BE DE FR GB IT NL SE**

(56) References cited:
**AU-B- 490 374**
**GB-A-1 280 778**
**US-A-3 485 374**
**US-A-3 707 234**

(73) Proprietor: **Bakke Industries Limited**
**Oosterland Street Dal Josafat**
**Paarl, 7646 (ZA)**

(72) Inventor: **Molnár, Otto, Dr.**
**158 Fagan Street**
**Strand, 7140 (ZA)**
Inventor: **Barnard, Johan Pieter**
**14 Protea Street**
**Wellington, 7655 (ZA)**

(74) Representative: **Tetzner, Volkmar, Dr.-Ing. Dr. Jur.**
**Van-Gogh-Strasse 3**
**D-8000 München 71 (DE)**

Courier Press, Leamington Spa, England.

## Description

The invention relates to liquid treatment devices having a number of membrane tubes, which are provided in a housing and which are interconnected. The liquid medium to be treated is supplied from one end of the device into one tube (or by way of a manifold into a number of tubes) and passes along the tubes to be treated through the walls of the membrane tubes. The treated liquid then is withdrawn from the space in the housing surrounding the membrane tubes. The liquid, which remains in the tubes, passes out through a discharge outlet. The walls of the tubes normally are made of fibrous material, which is relatively weak. The membrane walls generally are supported either in outer support tubes made of stiff material (e.g. metal) having holes for the treated liquid to pass through or the membrane tubes are supported in side-by-side stacked discs with aligned holes for the tubes, the discs having gaps through which the treated liquid passes.

The assembly of the membrane devices always has been cumbersome and expensive, in particular regarding the provision of interconnecting tubes at the end of the membrane tubes to join them into a continuous flow channel. A major problem in this regard was the proper sealing off of the ends of the membrane tubes to the interconnecting tubes.

It is an object of the invention to provide a liquid treatment device in which the problems encountered in the prior art are reduced.

A liquid treatment device according to the precharacterising portion of claim 1 is known from US—A—3,485,374.

According to the invention a liquid treatment device, which includes an elongated tubular housing; a number of elongated membrane tubes provided in the housing and being adapted to receive liquid to be treated; spacing means for spacing the membrane tubes in a non-contact relationship with each other; liquid supply means for supplying liquid to be treated to at least one of the membrane tubes; an outlet for treated liquid collected around the membrane tubes inside the housing; and a discharge outlet for waste liquid withdrawn from inside the tubes; flow interconnection means provided at either end of each membrane tube for connecting the ends of the membrane tubes so as to allow flow to take place from the end of one membrane tube into the end of at least one other membrane tube; characterized thereby that a resin casting is provided in situ in the housing at each end of the housing to enclose sealingly both the interconnection means as well as at least a part of the ends of the membrane tubes associated with the interconnection means, the resin castings being firmly locked relative to the housing; that the flow interconnection means includes a disc for each resin casting, each disc having a number of holes into which the ends of membrane tubes are fitted, each disc being located securely inside and relative to the housing and forming an end seal for its resin casting when being cast; and thereby that the flow interconnection means includes a number of coupling tubes for interconnecting the ends of the membrane tubes in series into one continuous elongated liquid treatment tube.

The coupling tubes may be U-tubes.

The housing may have an internal groove or grooves in the region in which the resin casting is provided, the resin casting extending into the grooves for locking it firmly to the housing, or an anchoring member extends through the resin casting and is fixed to the housing for locking the resin casting firmly to the housing, or both ends of the housing may be threaded and a correspondingly threaded cap may be provided at each end for screwing over each housing end for locking its resin casting in position.

Each end of the housing may be closed off by means of a closure cap, and a charging hole is provided in the closure cap for charging flowable resin into the housing for forming the resin casting.

The invention will now be described by way of example with reference to the accompanying schematic drawings.

In the drawings there is shown in

*Figure 1* a schematic outside view of a liquid treatment device in accordance with the invention;

*Figure 2* on a larger scale, a sectional side view of one end of the liquid treatment device illustrated in Figure 1;

*Figure 3* an end view on a plate member of the end connection member provided in the liquid treatment device and as seen along arrows III—III in Figure 2;

*Figure 4* a side view of a disc;

*Figure 5* a side view corresponding to Figure 4 but showing another type of disc; and

*Figure 6* a sectional side view of the end of a liquid treatment device corresponding to Figure 2 but showing an internally grooved housing.

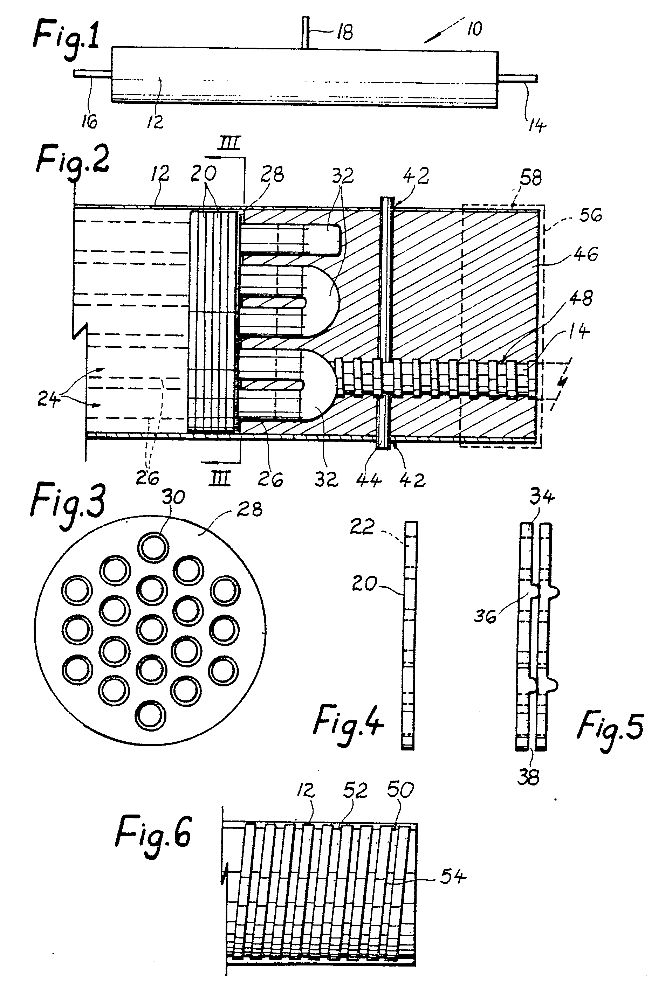

In Figure 1 of the drawings a schematic outside view of a liquid treatment device in accordance with the invention is illustrated. As is shown, the device 10 includes a tubular cylinder housing 12, a number of liquid membrane tubes (not shown) inside the housing, an inlet 14 for supplying liquid to be filtered to the membrane tubes, a discharge 16 leading from the membrane tubes for discharging liquid, which has passed through the tubes without filtration, and an outlet 18 for filter liquid which has been filtered through the membrane tubes and collected from the space surrounding the tubes inside the housing 12.

Referring now to Figure 2, the housing 12 is shown to be provided with a number of discs 20 arranged in side-by-side relationship inside the housing. These discs 20 have holes 22 and are arranged such that the holes 22 are in alignment to define elongated passages 24. The membrane tubes 26 are provided in these passages. Adjacent to the last disc on either end a plate member 28 is provided. The ends of the membrane tubes 26 pass through the holes 30 of the plate member 28 (the holes 30 being surrounded by a short collar or guide). The plate member 28 fits fully into the tube 12 so as to close off the discs 20 from the end opening of the housing 12. The ends of the membrane tubes 24 are interconnected by means of U-shaped interconnection pipe parts 32. These fit into the ends of the membrane tubes 24 so as to provide the membrane tubes 26 as one continuous filter passage.

It has been found that the discs 20, which may be made of punched out or injection moulded plastics material, provide a sufficient space between the discs for the filtered liquid to pass through for collection and flow out through the outlet 16. However, to provide a larger space the discs 20 may be provided with protrusions as is shown in Figure 5. Figure 5 shows discs 34 having protrusions 36 to space them from the adjacent discs for defining a gap 38 between the discs. Filtered liquid passes through this gap 38.

When the discs 20 (or 34) have been assembled and provided with the end plate member 28 and the U-tube connections 32, they are inserted into the tubular housing 12. The housing 12 has holes at opposite ends 42 for receiving a pin or shaft 44. With the pin 44 in position, a hardenable synthetic resin is poured into the space to form a casting 46. As is shown the casting 46 surrounds the pin 44, the pipe connectors 32, and extends up to the end plate 28. When hardened, there is no danger of any leakage occurring at the ends of the membrane filter tubes 26 receiving the connectors 32.

Also, as is shown, the inlet pipe 14 is provided with a grooved outer surface 48 for the resin to grip into. The same applies to the outlet pipe 16.

As is shown in Figure 6, the pin 44 may be replaced by grooves 50 provided on the inside surface 52 of the cylinder 12. The resin casting 54 then would fit into the grooves 50 to keep the assembly in position and to seal off the pipe connectors 32.

When a filter device is to be refitted with new membranes, the pin 44 is removed and the resin casting 46 at either end of the housing 12 is knocked out together with the discs 20, etc. Thereafter the resin castings 46 are cut off, the discs 20 are removed and are used again for fitting into a housing (it may be the same housing as before) to form a new liquid filter device 10. The device 10 can be subjected to backflow to clean it in the normal manner.

In place of the pin 44 (Figure 2) or the grooved inside surface 52 of the cylinder 12 (Figure 6), a cap shown in dotted lines 56 in Figure 2 may be used for keeping the resin casting 46 in position. This cap 56 should have an internal thread cooperating with a corresponding thread on the cylinder end 58. The cap 56 thus is screwed onto the cylinder end and keeps the casting 46 in position. For removal the cap 56 is merely turned off and the casting 46 is removed.

The device 10 also may be used for high flux filtration, reverse osmosis or ultra-filtration purposes.

The membrane tubes may be made of polyester fibre with hydrolised cellulose acetate on the inside.

## Claims

1. A liquid treatment device, which includes an elongated tubular housing (12); a number of elongated membrane tubes (26) provided in the housing (12) and being adapted to receive liquid to be treated; supporting means, e.g. in the form of discs (20), for supporting and spacing the membrane tubes (26) in a non-contact relationship with each other; liquid supply means (14) for supplying liquid to be treated to at least one of the membrane tubes (26); an outlet (18) for treated liquid collected around the membrane tubes (26) inside the housing (12); and a discharge outlet (16) for waste liquid withdrawn from inside the tubes (26); flow interconnection means (28, 32) provided at either end of each membrane tube (26) for connecting the ends of the membrane tubes (26) so as to allow flow to take place from the end of one membrane tube (26) into the end of at least one other membrane tube (26); characterised thereby that a resin casting (46, 54) is provided in situ in the housing (12) at each end of the housing (12) to enclose sealingly both the interconnection means (28, 32) as well as at least a part of the ends of the membrane tubes (26) associated with the interconnection means (28, 32), the resin castings (46, 54) being firmly locked relative to the housing (12); that the flow interconnection means (28, 32) includes a disc (28) for each resin casting (46, 54), each disc (28) having a number of holes (30) into which the ends of membrane tubes (26) are fitted, each disc (28) being located securely inside and relative to the housing (12) and forming an end seal for its resin casting (46, 54) when being cast; and thereby that the flow interconnection means (28, 32) includes a number of coupling tubes (32) for interconnecting the ends of the membrane tubes (26) in series into one continuous elongated liquid treatment tube.

2. A device as claimed in claim 1, characterised thereby that the coupling tubes are U-tubes (32).

3. A device as claimed in claim 1 or claim 2, characterised thereby that the housing (12) has an internal groove or grooves (50) in the region in which the resin casting (54) is provided, the resin casting (54) extending into the grooves (50) for locking it firmly to the housing (12).

4. A device as claimed in claim 1 or claim 2, characterised thereby that an anchoring member (44) extends through the resin casting (46) and is fixed to the housing (12) for locking the resin casting (46) firmly to the housing (12).

5. A device as claimed in claim 1 or claim 2, characterised thereby that both ends of the housing (12) are threaded and a correspondingly threaded cap (56) is provided at each end for screwing over each housing end for locking its resin casting (46) in position.

6. A device as claimed in any one of the preceding claims, characterised thereby that each end of the housing (12) is closed off by means of a closure cap (56), and a charging hole is provided in the closure cap for charging flowable resin into the housing for forming the resin casting (46, 54).

**Patentansprüche**

1. Vorrichtung zur Behandlung von Flüssigkeiten, enthaltend ein langgestrecktes, rohrförmiges Gehäuse (12), eine Anzahl langgestreckter Membranrohre (26), die in dem Gehäuse (12) vorgesehen und zur Aufnahme der zu behandelnden Flüssigkeit angepaßt sind, Halterungseinrichtungen, z.B. in Form von Scheiben (20), zur Halterung und räumlichen Verteilung der Membranrohre (26) in einer sich nicht berührenden Anordnung zueinander, ferner eine Flüssigkeitszuführeinrichtung (14) zum Zuführen von zu behandelnder Flüssigkeit zu wenigstens einem der Membranrohre (26), einen Auslaß (18) für behandelte Flüssigkeit, die um die Membranrohre (26) herum innerhalb des Gehäuses (12) gesammelt ist, sowie einen Entleerungsauslaß (16) für vom Innern der Rohre (26) abgezogene Abfallflüssigkeit, und Strömungsverbindungseinrichtungen (28, 32), die an beiden Enden jedes Membranrohres (26) zur Verbindung der Enden der Membranrohre (26) vorgesehen sind, um eine Strömung von dem Ende des einen Membranrohres (26) in das Ende wenigstens eines anderen Membranrohres (26) zu ermöglichen, dadurch gekennzeichnet, daß an jedem Ende des Gehäuses (12) ein Kunstharz-Gußstück (46, 54) an Ort und Stelle im Gehäuse (12) geschaffen ist, um sowohl die Verbindungseinrichtungen (28, 32) als auch wenigstens einen Teil der Enden der mit den Verbindungseinrichtungen (28, 32) verbundenen Membranrohre (26) dichtend zu umschließen, wobei die Kunstharz-Gußstücke (46, 54) relativ zum Gehäuse (12) fest blockiert sind,

daß die Strömungsverbindungseinrichtungen (28, 32) für jedes Kunstharz-Gußstück (46, 54) eine Scheibe (28) enthalten, die je eine Anzahl von Löchern (30) aufweisen, in die die Enden der Membranrohre (26) eingepaßt sind, wobei jede Scheibe (28) innerhalb des Gehäuses (12) relativ dazu sicher angeordnet ist und beim Gießen eine Endabdichtung für ihr Kunstharz-Gußstück (46, 54) bildet, und

daß die Strömungsverbindungseinrichtungen (28, 32) eine Anzahl von Kupplungsrohren (32) enthalten, um die Enden der Membranrohre (26) in Reihe zu einem fortlaufenden länglichen Flüssigkeitsbehandlungsrohr miteinander zu verbinden.

2. Vorrichtung nach Anspruch 1, dadurch gekennzeichnet, daß die Kupplungsrohre U-Rohre (32) sind.

3. Vorrichtung nach Anspruch 1 oder 2, dadurch gekennzeichnet, daß das Gehäuse (12) wenigstens eine innere Furche (50) in dem Bereich aufweist, in dem das Kunstharz-Gußstück (54) vorgesehen ist, wobei sich das Kunstharz-Gußstück (54) in die Furchen (50) hinein erstreckt, um es gegenüber dem Gehäuse (12) fest zu blockieren.

4. Vorrichtung nach Anspruch 1 oder 2, dadurch gekennzeichnet, daß ein Verankerungselement (44) sich durch das Kunstharz-Gußstück (46) erstreckt und am Gehäuse (12) befestigt ist, um das Kunstharz-Gußstück (46) gegenüber dem Gehäuse (12) fest zu blockieren.

5. Vorrichtung nach Anspruch 1 oder 2, dadurch gekennzeichnet, daß beide Enden des Gehäuses (12) mit Gewinde versehen sind und eine passend mit Gewinde versehene Kappe (56) an jedem Ende vorgesehen ist, zum Aufschrauben auf jedes Gehäuseende, um dessen Kunstharz-Gußstück (46) in seiner Position zu blockieren.

6. Vorrichtung nach einem der vorhergehenden Ansprüche, dadurch gekennzeichnet, daß jedes Ende des Gehäuses (12) mittels einer Verschlußkappe (56) verschlossen und ein Beschickungsloch in der Verschlußkappe vorgesehen ist, um fließfähigen Kunstharz zur Bildung des Kunstharz-Gußstückes (46, 54) in das Gehäuse einzuführen.

**Revendications**

1. Dispositif de traitement de liquide comprenant une enveloppe tubulaire (12), plusieurs membranes tubulaires (26) logées dans l'enveloppe (12) et destinées à recevoir le liquide à traiter, des organes de retenue, par exemple en forme de disques (20), destinés à supporter et à écarter les membranes tubulaires (26) de manière qu'elles ne soient pas en contact, un organe d'admission (14) destiné à alimenter en liquide à traiter au moins l'une des membranes tubulaires (26), une sortie (18) du liquide traité recueilli autour des membranes tubulaires (26) à l'intérieur de l'enveloppe (12), une sortie de décharge (16) du liquide de rebut soutiré de l'intérieur des tubes (26), des organes de raccord de l'écoulement (28, 32) montés à chaque extrémité de chaque membrane tubulaire (26) afin de relier ces extrémités de manière à permettre l'écoulement de l'extrémité d'une membrane (26) vers l'extrémité d'au moins une autre membrane tubulaire (26), dispositif caractérisé en ce qu'un moulage de résine (46, 54) réalisé in situ à l'intérieur de l'enveloppe (12), à chaque extrémité de cette dernière, enferme de manière étanche aussi bien les éléments de raccord (28, 32) qu'au moins une partie des extrémités des membranes tubulaires (26) reliées auxdits raccords (28, 32), les moulages de résine (46, 54) étant étroitement bloqués en place à l'intérieur de l'enveloppe (12), les organes de raccord de l'écoulement (28, 32) comprenant un disque (28) destiné à chaque moulage de résine (46, 54), chaque disque (28) comprenant plusieurs trous (30) dans lesquels une extrémité de chaque membrane tubulaire (26) est ajustée, chaque disque (28) étant étroitement immobilisé en place à l'intérieur de l'enveloppe (12) et par rapport à cette dernière et formant un joint d'étanchéité d'extrémité pour son moulage de résine (46, 54) lors de la coulée de ce dernier, les organes de raccord d'écoulement (28, 32) comprenant plusieurs tubes (32) destinés à relier les extrémités des membranes tubulaires (26) en série afin d'en former un unique tube continu de traitement de liquide.

2. Dispositif selon la revendication 1, caractérisé en ce que les tubes de raccord (32) sont coudés en étrier.

3. Dispositif selon l'une des revendications 1 et 2, caractérisé en ce que l'enveloppe (12) comprend à l'intérieur une ou plusieurs gorges (50) dans la région dans laquelle le moulage de résine (54) est réalisé, ce moulage pénétrant dans ces gorges (50) en étant ainsi étroitement immobilisé à l'intérieur de l'enveloppe (12).

4. Dispositif selon l'une des revendications 1 et 2, caractérisé en ce qu'un organe d'immobilisation (44) passant à travers le moulage de résine (46) est fixé dans l'enveloppe (12) afin de bloquer étroitement en place ce moulage à l'intérieur de l'enveloppe.

5. Dispositif selon l'une des revendications 1 et 2, caractérisé en ce que les deux extrémités de l'enveloppe (12) sont filetées et un capuchon taraudé correspondant (56) est vissé à chaque extrémité de l'enveloppe afin de bloquer en place le moulage correspondant de résine (46).

6. Dispositif selon l'une quelconque des revendications précédentes, caractérisé en ce que chaque extrémité de l'enveloppe (12) est obturée au moyen d'un capuchon (56) et un trou de charge est réalisé dans ce capuchon pour la coulée de résine fluide dans l'enveloppe pour la réalisation du moulage (46, 54).

0 062 086

Fig.1

Fig.2

Fig.3

Fig.4

Fig.5

Fig.6

1